# EUROPÄISCHE PATENTANMELDUNG

(11) **EP 0 551 871 A1**
(43) Veröffentlichungstag der Anmeldung: **21.07.1993**
(21) Anmeldenummer: 93100359.4
(22) Anmeldetag: 13.01.1993
(51) Int. Cl.: C08J 9/14, C08L 75/04

(54) **Verfahren zur Herstellung von aminvernetzten Polyurethan- oder Polyharnstoff-Formkörpern**

(30) Priorität: 15.01.1992 DE 4200797
(71) Anmelder: PHOENIX AKTIENGESELLSCHAFT, D-21079 Hamburg (DE)
(72) Erfinder: Schaper, Herbert, Dr., W-2000 Hamburg 13 (DE)

(57) **Zusammenfassung**

Die Erfindung betrifft ein Verfahren zur Herstellung von aminvernetzten Polyurethan- oder Polyharnstoff-Formkörpern mit einer Wandstärke von 2,5 bis 4,5 mm nach der Reaktionsspritzgußtechnik (RIM- Bzw. RRIM-Verfahren), wobei das Reaktionsgemisch neben der Polyolkomponente (A-Komponente), Polyisocyanatkomponente (B-Komponente) und dem Vernetzungsmittel gegebenenfalls Katalysatoren, Stabilisatoren, Hilfsmittel und/oder Zusatzstoffe enthält sowie gegebenenfalls die Reaktion unter Luftbeladung erfolgt. Das Wesentliche an dieser Erfindung besteht darin, daß dem Reaktionssystem eine sehr niedrigsiedende organische Verbindung als Treibmittel zugemischt wird, die innerhalb einer Reaktionszeit von 2 sec, insbesondere 1,3 sec, ihre vollständige Treibwirkung entfaltet.

## Beschreibung

Die Erfindung betrifft ein Verfahren zur Herstellung von aminvernetzten Polyurethan- oder Polyharnstoff-Formkörpern mit einer Wandstärke von 2,5 bis 4,5 mm nach der Reaktionsspritzgußtechnik (RIM- bzw. RRIM-Verfahren), wobei das Reaktionsgemisch neben der Polyolkomponente (A-Komponente), Polyisocyanatkomponente (B-Komponente) und dem Vernetzungsmittel gegebenenfalls Katalysatoren, Stabilisatoren, Hilfsmittel und/oder Zusatzstoffe (z.B. Glasfasern) enthält sowie gegebenenfalls die Reaktion unter Luftbeladung erfolgt.

Bei der Herstellung gattungsgemäßer Formkörper wird zur Zeit ausschließlich ohne organische Treibmittel gefahren. So arbeitet man beispielsweise für die häufigste Anwendung - Karosserieteile von Kraftfahrzeugen - im Dichtebereich zwischen 1,10 und 1,28 g/cm³ (je nach Glasfasergehalt) mit Wandstärken von 2,5 bis 4,5 mm.

Seitens der Automobilindustrie wird nun immer stärker der Wunsch geäußert, bei der Herstellung von Kunststoff-Verkleidungsteilen, z.B. für den Karosseriebereich, Gewicht einzusparen. Dies wird zur Zeit dadurch versucht, daß man die Wandstärken der Artikel bei gleichzeitiger E-Modulerhöhung des Kunststoffmaterials reduziert, z.B. von 3,5 mm auf 2,5 mm. Die von Haus aus sehr harten Thermoplaste haben damit Vorteile gegenüber den Polyurethanen oder Polyharnstoffen.

Aufgabe der Erfindung ist es nun, den Effekt der Gewichtseinsparung, insbesondere bei der Herstellung von aminvernetzten Polyurethan- oder Polyharnstoff-Formkörpern, nicht durch reduzierte Wandstärken, sondern durch Reduzierung des spezfischen Gewichtes bei gleichbleibender Wandstärke der Artikel zu erzielen.

Diese Aufgabe wird nun erfindungsgemäß dadurch gelöst, daß dem Reaktionssystem eine sehr niedrigsiedende organische Verbindung als Treibmittel zugemischt wird, die innerhalb einer Reaktionszeit von 2 sec, insbesondere 1,3 sec, ihre vollständige Treibwirkung entfaltet.

Für weiche Integralschäume höherer Wandstärken mit ihren erheblich längeren Reaktionszeiten ist das Prinzip, mit organischen Treibmitteln zu schäumen, bekannt, wobei bislang allerdings überwiegend das bei +23,8^{o}C siedende Monofluortrichlormethan (CCl₃F) dafür eingesetzt wurde. Dieses Treibmittel führt bei Einsatz in den modernen aminvernetzten RIM- und RRIM-Systemen zu keinem Treiben, da der gesamte Reaktionszeitraum nur maximal 2 sec beträgt und dieses Treibmittel in dieser kurzen Zeit nicht zum Sieden kommt. Anders dagegen verhalten sich überraschenderweise sehr niedrigsiedende Treibmittel, insbesondere mit einem Siedepunkt von ≦ 0^{o}C, wobei der Bereich zweckmäßigerweise zwischen -15 und -50^{o}C liegt. Solche Treibmittel entweichen unmittelbar nach Entspannung der beiden Reaktionskomponenten und verursachen dadurch ein sofortiges Aufschäumen der Reaktionsmasse während des Einschießens und Ausfließens in der Form. In der Form entsteht dadurch ein erhöhter Innendruck, der wiederum zu einer Verdichtung der Randzonen (an der Formwandung) führt, während das Material im Inneren (Kern) porös bleibt und dadurch die Gewichtsreduzierung erreichen läßt. Dieser Effekt wird durch die höhere Reaktionswärme im Kern (Wärmeabführung durch die metallische Formwandung im Randbereich) verstärkt. So lassen sich erhebliche Dichtenreduzierungen bis zu Dichten von ca. 0,7 g/cm³ erzielen. Durch zusätzliche Luftbeladung wird ferner eine Vergleichmäßigung der Dichte über die gesamte Form (Reduzierung des Dicktegradienten) bewirkt.

Erfindungsgemäße Treibmittel sind beispielsweise:
a) Diflourmonochlormethan (CHClF₂, Siedepunkt: -40,8^{o}C)
b) Difluordichlormethan (CCl₂F₂, Siedepunkt : -29,8^{o}C)
c) Tetrafluorethan (CH₂F-CF₃, Siedepunkt: -26,5^{o}C)
d) Ethan (Siedepunkt: -88,5^{o}C)
e) Propan (Siedepunkt: -44,5^{o}C)
f) Butan (Siedepunkt: 0,5^{o}C)
Bei Einsatz der nicht halogenhaltigen Kohlenwasserstoffe d bis f finden auch Gemische Verwendung. Ebenso können Gemische aus allen obengenannten Treibmitteln zur Anwendung gelangen.

Das Treibmittel wird zweckmäßigerweise in einer Menge von 0,5 bis 10 Gew.-%, insbesondere 1 bis 4 Gew.-%, eingesetzt, und zwar bezogen auf die gesamte Reaktionsmasse.

Das Treibmittel wird beim erfindungsgemäßen Verfahren vorzugsweise in die Polyolkomponente (A-Komponente) eingemischt, kann aber grundsätzlich auch zu der Polyisocyanatkomponente (B-Komponente) zugegeben werden. Die Treibmittel liegen dabei gelöst oder fein dispergiert vor.

Die Beladung (z.B. der A-Komponente) mit dem sehr niedrigsiedenden Treibmittel erfolgt unter Druck mit einer handelsüblichen Anlage, z.B. der Firma Hennecke oder Krauss-Maffei. Die beladene Reaktionskomponente kann unter Druck über mehrere Tage in sogenannten Reifebehältern gelagert werden, bevor sie zur Verarbeitung kommt. Die Verschäumung selbst erfolgt mit 2-Komponenten-Dosieranlagen, wie sie für den RIM- bzw. RRIM-Prozeß üblich sind.

Das erfindungsgemäße Verfahren hat den Vorteil, daß die bisher verwendeten Formen weiterbenutzt werden können, und damit auch ein gleich gutes Ausfließen des RIM- bzw. RRIM-Materials in der Form gewährleistet bleibt, was bei sehr dünnwandigen Formen Anlaß zu Problemen gibt.

Weiterhin kann auf Basis der bisherigen Härte der aminvernetzten Polyurethan- oder Polyharnstoff-Formkörper die gute Schlagbeständigkeit wie bisher gewährleistet werden, während Härteerhöhung, wie sie für das Dünnwandkonzept erforderlich ist, im allgemeinen zu einer geringeren Schlagbeständigkeit führt.

Im Rahmen einer Versuchsreihe werden nun die mechanischtechnologischen Daten von RIM-Spritzgußteilen mit und ohne organische Treibmittel miteinander verglichen (Tabelle), wobei dem Formkörper I ein Herstellungsverfahren gemäß dem Stand der Technik zugrunde liegt, während der Formköprer II nach dem erfindungsgemäßen Verfahren unter Einsatz von 1,62 Gew.-% Monochlordifluormethan, und zwar bezogen auf die gesamte Reaktionsmasse, hergestellt wurde. Beide Versuche wurden ohne Luftbeladung durchgeführt. Die plattenförmigen Prüfkörper hatten jeweils eine Stärke von 4 mm.

Hinsichtlich der Ergebnisse ist folgendes festzuhalten:
- Die Gewichtsreduzierung beträgt etwa 17 %.
- Bei Erniedrigung der Dichte von ca. 17 % ist ein Abfall der Härte bzw. Steifigkeit von einem E-Modul von 310 N/mm² auf 200 N/mm² und von einer Shore D-Härte von 55 auf 42 festzustellen. Entsprechend diesem Härteabfall erhöht sich der sogenannte Sag-Wert.
- Zugfestigkeit, Bruchdehnung, Weiterreißfestigkeit und Schlagzähigkeit bleiben weitgehend erhalten.
- Die Prüfkörper weisen zudem eine geschlossene Oberfläche auf und sind in üblicher Weise lackierbar.

| Daten | I | II |
|---|---|---|
| Dichte [g/cm³], DIN 53420 | 1,13 | 0,96 |
| Shore D, DIN 53505 | 55 | 42 |
| E-Modul [N/mm²], DIN 53457 | 310 | 200 |
| Reißfestigkeit [N/mm²] DIN 53455 | 29,0 | 26,0 |
| Reißdehnung [%], DIN 53455 | 257 | 264 |
| Weiterreißfestigkeit nach Graves [N/mm], DIN 53515 | 63 | 52 |
| Sag-Test ähnlich ASTM D 3769 mit 10 cm überhang [mm] | 4,4 | 9,9 |
| Schlagzähigkeit (Dynstat) bei -25^{o}C [Kj/m²], DIN 53435 | kein Bruch | kein Bruch |
| Oberfläche | lackierbar | lackierbar |

## Patentansprüche

1. Verfahren zur Herstellung von aminvernetzten Polyurethan- oder Polyharnstoff-Formkörpern mit einer Wandstärke von 2,5 bis 4,5 mm nach der Reaktionsspritzgußtechnik (RIM- bzw. RRIM-Verfahren), wobei das Reaktionsgemisch neben der Polyolkomponente (A-Komponente), Polyisocyanatkomponente (B-Komponente) und dem Vernetzungsmittel gegebenenfalls Katalysatoren, Stabilisatoren, Hilfsmittel und/oder Zusatzstoffe enthält sowie gegebenenfalls die Reaktion unter Luftbeladung erfolgt, dadurch gekennzeichnet, daß dem Reaktionssystem eine sehr niedrigsiedende organische Verbindung als Treibmittel zugemischt wird, die innerhalb einer Reaktionszeit von 2 sec, insbesondere 1,3 sec, ihre vollständige Treibwirkung entfaltet.

2. Verfahren nach Anspruch 1, dadurch gekennzeichnet, daß der Siedepunkt des Treibmittels ≦ 0^{o}C ist, insbesondere zwischen -15 und -50^{o}C beträgt.

3. Verfahren nach Anspruch 1 oder 2, dadurch gekennzeichnet, daß als Treibmittel Difluormonochlormethan verwendet wird.

4. Verfahren nach Anspruch 1 oder 2, dadurch gekennzeichnet, daß als Treibmittel Difluordichlormethan verwendet wird.

5. Verfahren nach Anspruch 1 oder 2, dadurch gekennzeichnet, daß als Treibmittel Tetrafluorethan verwendet wird.

6. Verfahren nach Anspruch 1 oder 2, dadurch gekennzeichnet, daß als Treibmittel halogenfreie Kohlenwasserstoffe verwendet werden.

7. Verfahren nach Anspruch 6, dadurch gekennzeichnet, daß Ethan und/oder Propan und/oder Butan verwendet werden.

8. Verfahren nach einem der Ansprüche 1 bis 7, dadurch gekennzeichnet, daß Gemische aus den halogenhaltigen und den nicht halogenhaltigen Treibmitteln verwendet werden.

9. Verfahren nach einem der Ansprüche 1 bis 8, dadurch gekennzeichnet, daß das Treibmittel in einer Menge von 0,5 bis 10 Gew.-%, insbesondere 1 bis 4 Gew.-%, eingesetzt wird, und zwar bezogen auf die gesamte Reaktionsmasse.
